# EUROPEAN PATENT APPLICATION

(11) **EP 4 764 828 A1**
(43) Date of publication of application: **24.06.2026**
(21) Application number: 25160754.5
(22) Date of filing: 27.02.2025
(51) Int. Cl.: G06F 8/51, G06F 8/76, G06N 20/00

(54) **METHOD AND SYSTEM FOR MIGRATING SOURCE CODE FROM SOURCE PROGRAMMING LANGUAGE TO TARGET PROGRAMMING LANGUAGE**

(30) Priority: 20.12.2024 IN 202441101368; 04.02.2025 US 202519045108
(71) Applicant: Wipro Limited, 560 035 Karnataka (IN)
(72) Inventor: DATTARAM, B A, 560076 Bangalore (IN); KRISHNA, Karri Vamsi, 518135 Andhra Pradesh (IN); MANJUNATHA, Neeluru, 515001 Andhra Pradesh (IN)
(74) Representative: Finnegan Europe LLP

(57) **Abstract**

A method and a system for migrating a source code from a source programming language to a target programming language using a Large Language Model (LLM) is disclosed. A processor receives a set of user instructions comprising a number of iterations and a set of code migration instructions. A preliminary target code is determined in the target programming language based on prompting the LLM using one or more of a set of optimized prompts and the source code. An evaluation report is determined for the preliminary target code based on prompting the LLM using one from the set of optimized prompts, the set of code migration instructions and the preliminary target code of a current iteration. The preliminary target code of the current iteration is rendered as a target code on an output device.

## Description

### TECHNICAL FIELD

This disclosure relates generally to the field of software development, and more specifically to a method and system for migrating source code from source programming language to target programming language.

### BACKGROUND

Legacy application modernization has emerged as a critical step for companies that want to upgrade their outdated software and frameworks in order to meet the demands of current business and modern technology standards. However, most companies continue to utilize legacy applications written in older programming languages that pose many operational challenges. As the business requirement change and technology advances, such legacy systems often fall short to deliver the performance, security, and scalability required to remain competitive. Modernization efforts help transform these legacy systems by adopting latest technologies.

Despite its importance, modernization of legacy applications presents significant challenges. Traditional approaches to modernization are generally expensive and require highly specialized manpower and considerable resources. Such processes are typically complicated, risky, and time-consuming, involving threats such as system downtime, data loss, and security vulnerabilities. Traditional approaches to modernization may also limit scalability and lead to vendor lock-in, where the companies become increasingly dependent on particular toolsets or technologies. Another challenge is that there are not enough professionals who have in-depth knowledge of both legacy application systems and modern technologies. Finally, the integration and dependence on numerous applications from external sources for application modernization make the process of legacy applications modernization more complex, expensive, and potentially less secure.

Therefore, there is a need for a methodology for migrating source code from source programming language to target programming language.

### SUMMARY OF THE INVENTION

In an embodiment, a method for migrating a source code from a source programming language to a target programming language using a Large Language Model (LLM). The method may include receiving, by a code migration unit, a set of user instructions that may include a number of iterations and a set of code migration instructions. The method may further include determining, by the code migration unit and for each of the number of iterations, a preliminary target code in the target programming language based on prompting the LLM using one or more of a set of optimized prompts and the source code. In an embodiment, the source code may be received from a code repository. The method may further include determining, by the code migration unit and for each of the number of iterations, an evaluation report for the preliminary target code based on prompting the LLM using one from the set of optimized prompts, the set of code migration instructions and the preliminary target code of a current iteration. In an embodiment, the evaluation report may include a result of compliance of the preliminary target code of the current iteration with respect to the set of code migration instructions. In an embodiment, the set of optimized prompts may be modified for a subsequent iteration by the LLM based on the evaluation report upon determining the result of compliance of the preliminary target code of the current iteration as a non-compliant code. The method may further include rendering, by the code migration unit, the preliminary target code of the current iteration as a target code on an output device, upon determining the result of compliance of preliminary target code of the current iteration as a compliant code.

In another embodiment, a system for migrating a source code from a source programming language to a target programming language using a Large Language Model (LLM). The system may include a code migration unit that may include a processor, and a memory communicably coupled to the processor. The memory stores processor-executable instructions, which when executed by the processor, cause the processor to receive a set of user instructions that may include a number of iterations and a set of code migration instructions. The processor may further determine, for each of the number of iterations, a preliminary target code in the target programming language based on prompting the LLM using one or more of a set of optimized prompts and the source code. In an embodiment, the source code may be received from a code repository. The processor may further determine, for each of the number of iterations, an evaluation report for the preliminary target code based on prompting the LLM using one from the set of optimized prompts, the set of code migration instructions and the preliminary target code of a current iteration. In an embodiment, the evaluation report may include a result of compliance of the preliminary target code of the current iteration with respect to the set of code migration instructions. In an embodiment, the set of optimized prompts may be modified for a subsequent iteration by the LLM based on the evaluation report upon determining the result of compliance of the preliminary target code of the current iteration as a non-compliant code. The processor may further render the preliminary target code of the current iteration as a target code on an output device, upon determining the result of compliance of the preliminary target code of the current iteration as a compliant code.

It is to be understood that both the foregoing general description and the following detailed description are exemplary and explanatory only and are not restrictive of the invention, as claimed.

### BRIEF DESCRIPTION OF THE DRAWING

The accompanying drawings, which are incorporated in and constitute a part of this disclosure, illustrate exemplary embodiments and, together with the description, serve to explain the disclosed principles.
**FIG. 1** is a block diagram of an exemplary system for migrating source code from source programming language to target programming language, in accordance with an embodiment of the present disclosure.
**FIG. 2** is a schematic diagram of a code determination unit of the system of **FIG. 1****,** in accordance with an embodiment of the present disclosure.
**FIG. 3** depicts an exemplary snapshot of an exemplary structured documentation of the source code, in accordance with an embodiment of the present disclosure.
**FIG. 4** depicts an exemplary snapshot of an exemplary source knowledge graph, in accordance with an embodiment of the present disclosure.
**FIG. 5** depicts an exemplary snapshot of an exemplary target knowledge graph, in accordance with an embodiment of the present disclosure.
**FIG. 6** depicts an exemplary snapshot of an exemplary preliminary target code, in accordance with an embodiment of the present disclosure.
**FIG. 7** depicts an exemplary snapshot of an exemplary evaluation report, in accordance with an embodiment of the present disclosure.
**FIG. 8** is a flow diagram of a methodology of migrating source code from source programming language to target programming language, in accordance with an embodiment of present disclosure.
**FIG. 9** is a flow diagram of a methodology of determining the preliminary target code, in accordance with an embodiment of present disclosure.

### DETAILED DESCRIPTION OF THE DRAWINGS

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered exemplary only, with the true scope being indicated by the following claims. Additional illustrative embodiments are listed.

Further, the phrases "in some embodiments", "in accordance with some embodiments", "in the embodiments shown", "in other embodiments", and the like mean a particular feature, structure, or characteristic following the phrase is included in at least one embodiment of the present disclosure and may be included in more than one embodiment. In addition, such phrases do not necessarily refer to the same embodiments or different embodiments. It is intended that the following detailed description be considered exemplary only, with the true scope being indicated by the following claims.

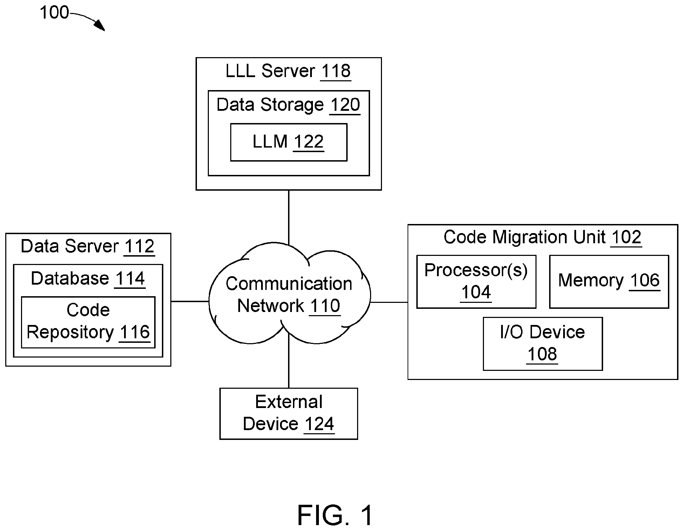

Referring now to **FIG. 1****,** a block diagram of an exemplary system 100 for migrating source code from source programming language to target programming language, is illustrated, in accordance with an embodiment of the present disclosure. The system 100 may include a code migration unit 102, a data server 112, a Large Language Model (LLM) server 118, and an external device 124 communicably coupled to each other through a wired or wireless communication network 110. The code migration unit 102 may include a processor 104, a memory 106 and an input/output (I/O) device 108.

In an embodiment, processor(s) 104 may include but are not limited to, microcontrollers, microprocessors, digital signal processors (DSPs), application-specific integrated circuits (ASICs), field-programmable gate arrays (FPGAs), system-on-chip (SoC) components, or any other suitable programmable logic devices. Examples of processor(s) 104 may include, but are not limited to, an Intel^{®} Itanium^{®} or Itanium 2 processor(s), or AMD^{®} Opteron^{®} or Athlon MP^{®} processor(s), Motorola^{®} lines of processors, Nvidia^{®}, FortiSOC^{™}, system on a chip processors or other future processors.

In an embodiment, the memory 106 may store instructions that, when executed by the processor 104, and cause the processor 104 to migrate a source code from a source programming language to a target programming language, as will be discussed in greater detail herein below. In an embodiment, the memory 106 may be a non- volatile memory or a volatile memory. In an embodiment, the memory 106 may also store a single module or a combination of different modules to migrate the source code from the source programming language to the target programming language. Examples of non-volatile memory may include but are not limited to, a flash memory, a Read Only Memory (ROM), a Programmable ROM (PROM), Erasable PROM (EPROM), and Electrically EPROM (EEPROM) memory. Further, examples of volatile memory may include but are not limited to, Dynamic Random Access Memory (DRAM), and Static Random-Access memory (SRAM).

In an embodiment, the I/O device 108 may comprise of variety of interface(s), for example, interfaces for data input and output devices, and the like. The I/O device 108 may facilitate inputting of instructions by a user communicating with the code migration unit 102. In an embodiment, the I/O device 108 may be wirelessly connected to the code migration unit 102 through wireless network interfaces such as Bluetooth^{®}, infrared, or any other wireless radio communication known in the art. In an embodiment, the I/O device 108 may be connected to a communication pathway for one or more components of the code migration unit 102 to facilitate the transmission of inputted instructions and output results of data generated by various components such as, but not limited to, processor(s) 104 and memory 106.

In an embodiment, the data server 112 may be enabled in a remote cloud server or a co-located server and may include a database 114 to store a code repository 116 and other data necessary for the system 100 such as, but not limited to a set of user instructions, a set of predefined prompts. In an embodiment, the data server 112 may store data input by an external device 124 or output generated by the code migration unit 102. In an embodiment, the code migration unit 102 may be communicably coupled with the data server 112 through the communication network 110.

In an embodiment, the LLM server 118 may be enabled in a remote cloud server or a co-located server and may include a data storage 120 to store an LLM 122 and other data necessary for the system 100. Examples of the LLM 122 may include but are not limited to, Generative Pre-trained Transformer (GPT), Large Language Model Meta AI (Llama), Bidirectional Encoder Representations from Transformers (BERT), Cohere, etc. In an embodiment, the LLM server 118 may store data input by an external device 124 or output generated by the code migration unit 102. In an embodiment, the code migration unit 102 may be communicably coupled with the LLM server 118 through the communication network 110.

In an embodiment, the communication network 110 may be a wired or a wireless network or a combination thereof. The communication network 110 can be implemented as one of the different types of networks, such as but not limited to, ethernet IP network, intranet, local area network (LAN), wide area network (WAN), or a Metropolitan Area Network (MAN). Various devices in the system 100 may be configured to connect to the communication network 110, in accordance with various wired and wireless communication protocols. Examples of such wired and wireless communication protocols may include, but are not limited to, a Transmission Control Protocol and Internet Protocol (TCP/IP), User Datagram Protocol (UDP), Hypertext Transfer Protocol (HTTP), File Transfer Protocol (FTP), Zig Bee, EDGE, IEEE 802.11, light fidelity (Li-Fi), 802.16, IEEE 802.11s, IEEE 802.11g, multi-hop communication, wireless access point (AP), device to device communication, cellular communication protocols, and Bluetooth (BT) communication protocols. Further the communication network 110 can include a variety of network devices, including routers, bridges, servers, computing devices, storage devices, and the like.

In an embodiment, the code migration unit 102 and the external device 124 may be a computing system, including but not limited to, a laptop computer, a desktop computer, a notebook, a workstation, a server, a portable computer, a handheld or a mobile device. In an embodiment, the code migration unit 102 may be, but not limited to, in-built into the external device 124 or may be a standalone computing device. In an embodiment, the code migration unit 102 may perform various processing in order to migrate source code from source programming language to target programming language.

By way of an example, the code migration unit 102 may receive a set of user instructions that may include a number of iterations and a set of code migration instructions as an input. The set of code migration instructions may include, but not limited to, a source code, functional information of the source code, a source programming language, and a target programming language. In an embodiment, the input may be indicated or provided by a user via the I/O device 108. In an embodiment, the source code may be received from the code repository 116.

The code migration unit 102 may further determine a set of optimized prompts by prompting the LLM 122 using a first prompt, the set of code migration instructions and a set of predefined prompts. In an embodiment, the first prompt may be contextualized to determine the set of optimized prompts by contextualizing the set of predefined prompts based on the set of code migration instructions.

The code migration unit 102 may further determine a structured documentation of the source code by prompting the LLM 122 using a second prompt from the set of optimized prompts and the source code. In an embodiment, the second prompt may be contextualized to determine the structured documentation of the source code. In an embodiment, the structured documentation may include a plurality of source code entities corresponding to the source code. In an embodiment, the plurality of source code entities may include, but not limited to, class information, function information, sub-routine information, constructor information and module information, package information decorator information, exception information and lambda function information.

The code migration unit 102 may further determine a source knowledge graph representing dependencies of the source code by prompting the LLM 122 using a third prompt from the set of optimized prompts, the source code, the structured documentation and the set of code migration instructions. In an embodiment, the third prompt may be contextualized to determine the source knowledge graph based on the source code, the structured documentation and the set of code migration instructions.

The code migration unit 102 may further determine a target knowledge graph by prompting the LLM 122 using a fourth prompt from the set of optimized prompts, the source knowledge graph, and the source code. In an embodiment, the fourth prompt may be contextualized to determine the target knowledge graph based on the source code and the source knowledge graph. In order to determine the target knowledge graph, the LLM 122 may convert the plurality of source code entities corresponding to the source code into a plurality of target code entities with respect to the target programming language.

The code migration unit 102 may further determine a preliminary target code in the target programming language based on prompting the LLM 122 using a fifth prompt from the set of optimized prompts and the target knowledge graph. In an embodiment, the fifth prompt may be contextualized to determine the preliminary target code based on the target knowledge graph.

The code migration unit 102 may further determine an evaluation report for the preliminary target code based on prompting the LLM 122 using one from the set of optimized prompts, the set of code migration instructions and the preliminary target code of a current iteration. In an embodiment, the evaluation report may include a result of compliance of the preliminary target code of the current iteration with respect to the set of code migration instructions. In an embodiment, the set of optimized prompts may be modified for a subsequent iteration by the LLM 122 based on the evaluation report upon determining the result of compliance of the preliminary target code of the current iteration as a non-compliant code. The code migration unit 102 may again determine the preliminary target code in the target programming language based on prompting the LLM 122 using one or more of the modified set of optimized prompts. The code migration unit 102 may further render the preliminary target code of the current iteration as a target code on the I/O device 108, upon determining the result of compliance of the preliminary target code of the current iteration as a compliant code.

In an embodiment, the disclosed system 100 may be implemented as a computer-readable medium (CRM) that stores executable instructions for migrating source code from a source programming language to a target programming language. The CRM may store non-transitory computer-readable instructions that, when executed by a processor (such as the processor 104), cause the system 100 to perform various operations described in the present disclosure. These operations may include, but are not limited to, receiving source code and migration instructions, interacting with a Large Language Model (LLM) server 118, generating structured documentation, determining source and target knowledge graphs, and producing target code based on iterative feedback. The CRM may be any form of non-volatile memory, such as a flash memory, read-only memory (ROM), or an electrically erasable programmable read-only memory (EEPROM), configured to store data and executable instructions for performing code migration. The CRM may also contain modules for generating and managing optimized prompts, contextualizing documentation, and conducting iterative compliance checks for code migration.

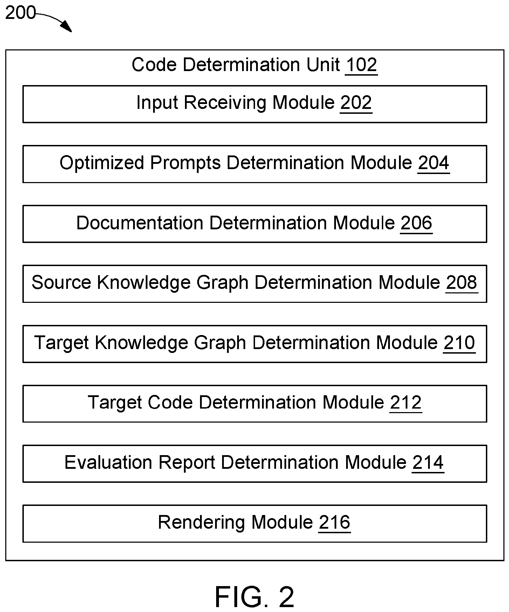

Referring now to **FIG. 2****,** a schematic diagram 200 of the code migration unit 102 of the system of **FIG. 1****,** is illustrated, in accordance with an embodiment of the present disclosure. In an embodiment, the code migration unit 102 may include an input receiving module 202, an optimized prompts determination module 204, a documentation determination module 206, a source knowledge graph determination module 208, a target knowledge graph determination module 210, a target code determination module 212, an evaluation report determination module 214, and a rendering module 216.

The input receiving module 202 may receive a set of user instructions that may include a number of iterations and a set of migration instructions as an input. The set of code migration instructions may include, but not limited to, a source code, functional information of the source code, a source programming language, and a target programming language. In an embodiment, the input may be indicated or provided by a user via the I/O device 108. In an embodiment, the source code may be received from the code repository 116. In an embodiment, the set of user instructions may be input by the user via the I/O device 108, which may include a text-based input, voice commands, or a file containing detailed instructions. For instance, a user might provide a URL of an application code repository, the number of iterations to perform during the migration process, and specific guidelines related to both the source programming language and the target programming language.

In an exemplary embodiment, the user may input the set of user instructions such as "The source code is written in Python and is part of an enterprise application", "Two files, oldlogic.py and newstyling.py, should be ignored as they are no longer in use", "The target programming language is Java Spring Boot". "Each file in the target code should not exceed 1500 lines", "Long methods or constructors should be avoided", "Annotations should be used instead of XML configurations in the target code".

Upon receiving the set of user instructions, the optimized prompts determination module 204 may determine a set of optimized prompts by prompting the LLM 122 using a first prompt, the set of code migration instructions and a set of predefined prompts. In an embodiment, the first prompt may be contextualized to determine the set of optimized prompts by contextualizing the set of predefined prompts based on the set of code migration instructions. In an embodiment, the optimized prompts determination module 204 may work in conjunction with the LLM 122 to determine the set of optimized prompts for the migration process. The set of predefined prompts may initially include five predefined prompts corresponding to documentation creation of the source code, source knowledge graph determination, target knowledge graph determination, target code determination, and code evaluation.

Further, the documentation determination module 206 may determine a structured documentation of the set of optimized prompts and the source code. In an embodiment, the second prompt may be contextualized to determine the structured documentation of the source code. In an embodiment, the structured documentation may include a plurality of source code entities corresponding to the source code. In an embodiment, the plurality of source code entities may include, but not limited to, class information, function information, sub-routine information, constructor information and module information, package information, decorator information, exception information and lambda function information.

In accordance with the exemplary embodiment, an original prompt for source knowledge graph creation from the set of predefined prompts may provide basic instructions for capturing the DNA of the source code, including explanations of key terminologies such as classes, functions, methods, constructors, modules, and mode. The original prompt for documentation creation for example is depicted below:
*"\n Your task is to capture the DNA of the code with detailed documentation. Below are the simple explanations of terminology using which you need to document the code flow. This document will be used for migrating the source code at a later stage. \nClass: In programming languages, a class is a blueprint or a template for creating objects (instances) that share common properties and behaviours. It serves as a way to organize and structure code by encapsulating data (attributes) and functions methods) that operate on that data. \nFunction: A function is a block of organized, reusable code that is used to perform a single, related action. Functions provide better modularity for your application and a high degree of code reusing. InMethod: In object-oriented programming, a method is a subroutine that is exclusively associated either with a class (in which case it is called a class method or a static method) or with an object (in which case it is an instance method). \nConstructor: A constructor is a special type of method that is used to initialize an object. It is called when an instance of the object is created, and it usually sets the initial state of the object."*

The second prompt from the set of optimized prompts may be contextualized to determine the structured documentation of the source code. The contextualization for the second prompt may be, for example is depicted below:
*"Task here 's to modify the {DOCUMENTATION CREATION PROMPT} to suit the user 's Instructions {user 's Instructions} for application documentation purpose. The user instructions may contain source language and those corresponding code elements must be embedded in the prompt. The modified prompt will help capture the source code in a comprehensive manner."*

However, based on the set of code migration instructions, the original prompt for documentation creation may be further optimized to align with the details of the migration task. The optimized prompts determination module 204 may determine the second prompt from the set of optimized prompts based on the set of user instructions, the original prompt for documentation creation, and the set of code migration instructions. For example, if the source code is written in Python and is an enterprise application, the second prompt would adapt Python-specific terminologies. The second prompt may be, for example is depicted below:
*"\nYour task is to capture the DNA of the code with detailed documentation. Below are the simple explanations of terminology using which you need to document the code flow. This document will be used for migrating the source code at a later stage.*
*Class: In Python, a class is a blueprint or a template for creating objects (instances) that share common properties and behaviours. It serves as a way to organize and structure code by encapsulating data (attributes) and functions (methods) that operate on that data. Function: A function in Python is a block of organized, reusable code that is used to perform a single, related action. Functions provide better modularity for your application and a high degree of code reusing.*
*Method: In Python s object-oriented programming, a method is a subroutine that is exclusively associated either with a class (in which case it is called a class method or a static method) or with an object (in which case it is an instance method).*
*Constructor: In Python, a constructor is a special type of method that is used to initialize an object. It is defined using the_in it_method and is called when an instance of the object is created, usually setting the initial state of the object.*
*Module: A module in Python is a file containing Python definitions and statements. Modules allow you to logically organize your Python code. Grouping related code into a module makes the code easier to understand and use.*
*Package: A package in Python is a way of organizing related modules into a single directory hierarchy. Packages allow for a hierarchical structuring of the module namespace using dot notation.*
*Decorator: A decorator in Python is a special type of function that is used to modify the behaviour of another function or method. Decorators are often used to add functionality to existing code in a clean and readable way.*
*Exception: An exception in Python is an event that occurs during the execution of a program that disrupts the normal flow of the program s instructions. Python provides a way to handle these exceptions using try-except blocks.*
*Lambda Function: A lambda function in Python is a small anonymous function defined using the lambda keyword. Lambda functions can have any number of arguments but only one expression."*

Further, the source knowledge graph determination module 208 may determine a source knowledge graph representing dependencies of the source code by prompting the LLM 122 using a third prompt from the set of optimized prompts, the source code, the structured documentation and the set of code migration instructions. In an embodiment, the third prompt may be contextualized to determine the source knowledge graph based on the source code the structured documentation and the set of code migration instructions.

In accordance with the exemplary embodiment, an original prompt for source knowledge graph creation from the set of predefined prompts may request a JSON-formatted output that includes the plurality of source code entities and their dependencies. The original prompt for source knowledge graph creation may be for example is depicted below:
*"\nYou are given a code file {code} and a documentation {document_file} which contains all the information about all the code files. \nThe user will provide the source language {source_language} and the target language{target_language} for the code conversion. The source language is the programming language of the given code file, and the target language is the programming language to which the code needs to be converted.*
*\nThe output should be in JSON format where file name is a key and its value is a list of dictionaries. Each dictionary represents a CODE_ENTITY and contains keys such as CODE_ENTITY, NAME, DEPENDENCY, DEPENDENCY_TYPE, DEPENDENCY_SOURCE, PARAMETER_DETAILS, FUNCTIONALITY, ENTITY_CALLING, and MISC."*

The third prompt from the set of optimized prompts may be contextualized to determine the source knowledge graph. The contextualization for the third prompt may be, for example is depicted below:
*"Task here's to modify the {SOURCE_KNOWLEDGE_GRAPH_PROMPT} to suit the user 's Instructions {user 's Instructions} for application documentation purpose. The user instructions may contain source language, target language, special instructions and those corresponding code elements must be embedded in the prompt. The modified prompt will help capture the source code dependencies in a comprehensive manner."*

However, based on the set of code migration instructions, the original prompt for source knowledge graph creation may be further optimized to align with the details of the migration task. The optimized prompts determination module 204 may determine the third prompt from the set of optimized prompts based on the set of user instructions, the original prompt for source knowledge graph creation, and the set of code migration instructions. For example, the third prompt may be for example is depicted below:
*"\nYou are given a code file {code} and a documentation {document_file} which contains all the information about all the code files.*
*\nThe user will provide the source language {source_language} and the target language{target_language} for the code conversion. The source language is the programming language of the given code file, and the target language is the programming language to which the code needs to be converted.*
*\nThe output should be in JSON format where file name is a key and its value is a list of dictionaries. Each dictionary represents a CODE_ENTITY and contains keys such as CODE_ENTITY, NAME, DEPENDENCY, DEPENDENCY_TYPE, DEPENDENCY SOURCE, PARAMETER DETAILS, FUNCTIONALITY, ENTITY CALLING, and MISC."*

Further, the target knowledge graph determination module 210 may determine a target knowledge graph by prompting the LLM 122 using a fourth prompt from the set of optimized prompts, the source knowledge graph, and the source code. In an embodiment, the fourth prompt may be contextualized to determine the target knowledge graph based on the source code and the source knowledge graph. In order to determine the target knowledge graph, the LLM 122 may convert the plurality of source code entities corresponding to the source code into a plurality of target code entities with respect to the target programming language.

In accordance with the exemplary embodiment, an original prompt for target knowledge graph creation from the set of predefined prompts may requests the LLM 122 to analyse the source knowledge graph in JSON format, which contains information about the plurality of source code entities (such as class, method, function, and their dependencies). The original prompt for target knowledge graph creation may the prompt the LLM 122 to convert the plurality of source code entities into their plurality of target language equivalents. The original prompt for target knowledge graph creation may be for example is depicted below:
*"\nYour task is to migrate the entire knowledge library from one language to another language.*
*\nYou will be given a comprehensive knowledge graph {kl modified} in form of JSON format which contains the information about the code entities like class, method, function, constructor, variable, parameter, and dependency across multiple code files.*
*\nYour task is to analyse the given JSON file (which contains all the information of all the codes) about the source language {source_language} code entities and convert it into the target language {target_language} code entities.*
*\nThe output should be in JSON format where file name is a key and its value is a list of dictionaries. Each dictionary represents a CODE_ENTITY and contains keys such as CODE_ENTITY, NAME, DEPENDENCY, DEPENDENCY_TYPE, DEPENDENCY_SOURCE, PARAMETER_DETAILS, FUNCTIONALITY, ENTITY_CALLING, and MISC."*

The fourth prompt from the set of optimized prompts may be contextualized to determine the target knowledge graph. The contextualization for the fourth prompt may be, for example is depicted below:
*"Task here s to modify the {TARGET_KNOWLEDGE_GRAPH_PROMPT} to suit the user 's Instructions {user s Instructions} for application documentation purpose. The user instructions may contain source language, target language, special instructions and those corresponding code elements must be embedded in the prompt. The modified prompt will help capture the source code dependencies in a comprehensive manner."*

However, based on the set of code migration instructions and the source knowledge graph, the original prompt for target knowledge graph creation may be further optimized to align with the details of the migration task. The optimized prompts determination module 204 may determine the fourth prompt from the set of optimized prompts based on the original prompt for target knowledge graph creation, the source knowledge graph and the set of code migration instructions. For example, the fourth prompt may be for example is depicted below:
*"\nYour task is to migrate the entire knowledge library from one language to another language.*
*\nYou will be given a comprehensive knowledge graph {kl modified} in form of JSON format which contains the information about the code entities like class, method, function, constructor, variable, parameter, and dependency across multiple code files.*
*\nYour task is to analyse the given JSON file (which contains all the information of all the codes) about the source language {source_language} code entities and convert it into the target language {target language} code entities. The generated target knowledge graph should not only build the dependencies based on the source knowledge graph but also ensure that as per user instructions, no method should cross 1500 lines, generate annotations and not XMLs and constructors too should be limited in functionality to make it readable.*
*\nThe output should be in JSON format where file name is a key and its value is a list of dictionaries. Each dictionary represents a CODE_ENTITY and contains keys such as CODE_ENTITY, NAME, DEPENDENCY, DEPENDENCY_TYPE, DEPENDENCY SOURCE, PARAMETER DETAILS, FUNCTIONALITY, ENTITY CALLING, and MISC."*

Further, the target code determination module 212 may determine a preliminary target code in the target programming language based on prompting the LLM 122 using a fifth prompt from the set of optimized prompts and the target knowledge graph. In an embodiment, the fifth prompt may be contextualized to determine the preliminary target code based on the target knowledge graph.

In accordance with the exemplary embodiment, an original prompt for preliminary code determination from the set of predefined prompts may requests the LLM 122 to analyse the knowledge library provided in JSON format and determine the preliminary code for each file separately. The original prompt may further request the LLM 122 to use the file name as a heading and to output the determined code in the specified target language. The original prompt for preliminary code determination may be for example is depicted below:
*"\nYour task is to generate code from the given knowledge library which is in form of JSON.*
*\nYou will be given a knowledge library {kl_migrated} in form of JSON format which contains the information about the code entities like class, method, function, constructor, variable, parameter, and dependency for each file.*
*\nThe JSON file contains the information of one or more than one code files with its file name. If more than one present, then you need to generate the code for each file separately and need to give me file name as heading for each file generation.*
*\nMention the heading for each file should be in this format: #file_name: namelpath for the file.*
*\n The target language is : {target_language}."*

The fifth prompt from the set of optimized prompts may be contextualized to determine the preliminary target code. The contextualization for the fifth prompt may be, for example is depicted below:
*"Task here s to modify the {CODE GENERATION PROMPT} to suit the user s Instructions {user 's Instructions} for application documentation purpose. The user instructions may contain source language, target language, special instructions and those corresponding code elements must be embedded in the prompt. The modified prompt will help capture the source code dependencies in a comprehensive manner."*

However, based on the set of code migration instructions and the target knowledge graph, the original prompt for preliminary code determination may be further optimized to align with the details of the migration task. The optimized prompts determination module 204 may determine the fifth prompt from the set of optimized prompts based on the target knowledge graph and the original prompt for preliminary code determination, and the set of code migration instructions. The fifth prompt may be for example is depicted below:
*"\nYour task is to generate Java Spring boot code from the given knowledge library which is in form of JSON.*
*\nYou will be given a knowledge library {kl_migrated} in form of JSON format which contains the information about the code entities like class, method, function, constructor, variable, parameter, and dependency for each file.*
*\nThe JSON file contains the information of one or more than one code files with its file name. If more than one present, then you need to generate the code for each file separately and need to give me file name as heading for each file generation.*
*\nMention the heading for each file should be in this format: #file_name: namelpath for the file.*
*\nThe target language is: {target_language. The generated Java code should adhere to the following - no method should cross 1500 lines, generate annotations and not XMLs and constructors too should be limited in functionality to make it readable."*

Further, the evaluation report determination module 214 may determine an evaluation report for the preliminary target code based on prompting the LLM using one from the set of optimized prompts, the set of code migration instructions and the preliminary target code of a current iteration. In accordance with the exemplary embodiment, an original prompt for evaluation report determination from the set of predefined prompts may requests the LLM 122 to evaluate the preliminary target code. The original prompt for evaluation report determination may be for example is depicted below:
*"\n The task here's to run a self-evaluation of a generated code {code} in the migration scenario.*
*These are the instructions*/*review points {user_evaluation_points} for the {code}. Task here's to evaluate the {code} and identify the pieces of code which doesn't adhere to the instructions.*
*Generate a report to consist of the following parameters: {filename, code element, user review points, deviation}."*

The one from the set of optimized prompts may be referred as a "sixth prompt" may be contextualized to determine evaluation report. The contextualization for the sixth prompt may be, for example is depicted below:
*"Task here's to modify the {CODE_EVALUATION_PROMPT} to suit the user* 's *Instructions {user s Instructions} for code evaluation purpose. The user instructions may contain source language, target language, special instructions and those corresponding code elements must be embedded in the prompt."*

However, based on the set of code migration instructions and the preliminary target code, the original prompt for determining evaluation report may be further optimized to align with the details of the migration task. The optimized prompts determination module 204 may determine the sixth prompt from the set of optimized prompts based on the preliminary target code and the original prompt for determining evaluation report, and the set of code migration instructions. The sixth prompt may be for example is depicted below:
*"The task here's to run a self-evaluation of a generated code {code} in the migration scenario.*
*These are the instructions*/*review points {user_evaluation_points} for the {code}. Task here's to evaluate the {code} and identify the pieces of code which doesn't adhere to the instructions.*
*Generate a report to consist of the following parameters: {filename, code element, user review points, deviation}."*

The evaluation report may include a result of compliance of the preliminary target code of the current iteration with respect to the set of code migration instructions. In an embodiment, the set of optimized prompts may be modified for a subsequent iteration by the LLM 122 based on the evaluation report upon determining the result of compliance of the preliminary target code of the current iteration as a non-compliant code.

Further, the rendering module 216 may render the preliminary target code of the current iteration as a target code on the I/O device 108, upon determining the result of compliance of the preliminary target code of the current iteration as a compliant code.

It should be noted that all such aforementioned modules 202-216 may be represented as a single module or a combination of different modules. Further, as will be appreciated by those skilled in the art, each of the modules 202-216 may reside, in whole or in parts, on one device or multiple devices in communication with each other. In some embodiments, each of the modules 202-216 may be implemented as dedicated hardware circuit comprising custom application-specific integrated circuit (ASIC) or gate arrays, off-the-shelf semiconductors such as logic chips, transistors, or other discrete components. Each of the modules 202-216 may also be implemented in a programmable hardware device such as a field programmable gate array (FGPA), programmable array logic, programmable logic device, and so forth. Alternatively, each of the modules 202-216 may be implemented in software for execution by various types of processors (e.g. processor 104). An identified module of executable code may, for instance, include one or more physical or logical blocks of computer instructions, which may, for instance, be organized as an object, procedure, function, or other construct. Nevertheless, the executables of an identified module or component need not be physically located together but may include disparate instructions stored in different locations which, when joined logically together, include the module and achieve the stated purpose of the module. Indeed, a module of executable code could be a single instruction, or many instructions, and may even be distributed over several different code segments, among different applications, and across several memory devices.

As will be appreciated by one skilled in the art, a variety of processes may be employed for migrating source code from source programming language to target programming language using Large Language Model (LLM). For example, the exemplary system 100 and the associated code migration unit 102 may migrate source code from source programming language to target programming language using Large Language Model (LLM) by the processes discussed herein. In particular, as will be appreciated by those of ordinary skill in the art, control logic and/or automated routines for performing the techniques and steps described herein may be implemented by the system 100 and the associated code migration unit 102 either by hardware, software, or combinations of hardware and software. For example, suitable code may be accessed and executed by the one or more processors on the system 100 to perform some or all of the techniques described herein. Similarly, application specific integrated circuits (ASICs) configured to perform some, or all of the processes described herein may be included in the one or more processors on the system 100.

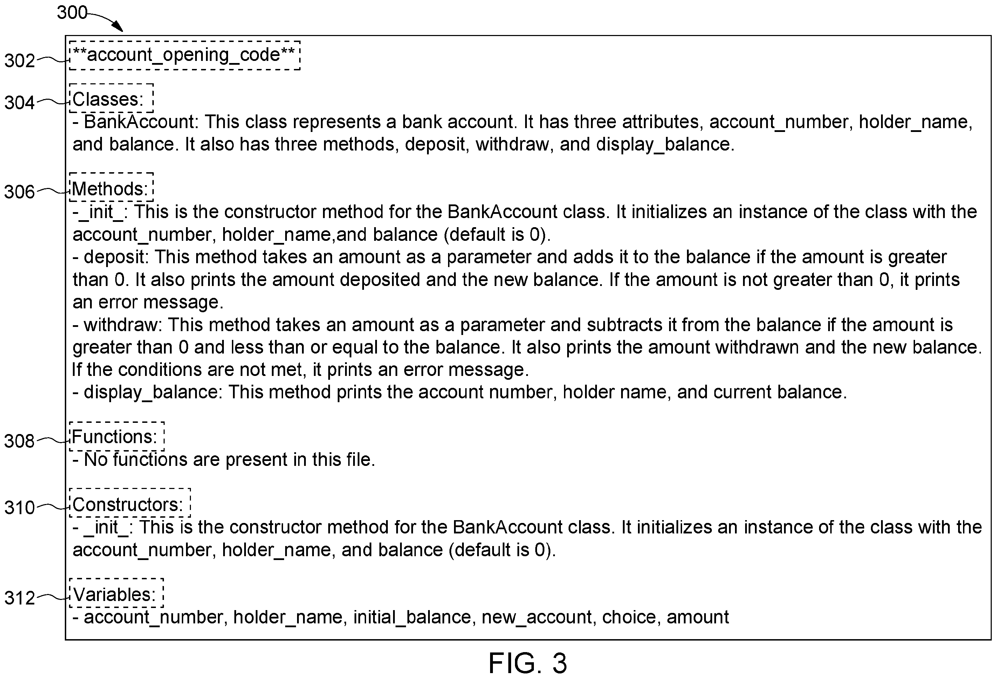

Referring now to **FIG. 3****,** an exemplary snapshot of an exemplary structured documentation 300 of the source code, is depicted, in accordance with an embodiment of the present disclosure. **FIG. 3** is explained in conjunction with **FIG. 1** and **FIG. 2****.** The exemplary snapshot illustrates how the source code is documented by providing the structured documentation 300 that includes a plurality of entities, including but not limited to, class information, function information, sub-routine information, constructor information and module information, package information decorator information, exception information and lambda function information. The structured documentation serves as a critical part of the code migration process, which involves transitioning the source code from the source programming language to the target programming language, while ensuring that the structure, functionality, and dependencies are well-captured.

In accordance with the **FIG. 3****,** a first section 302 represents the file or function heading, labelled as "account_opening_code", indicates the specific code being documented. In a second section 304, a class information named "BankAccount" is described. The class information represents a bank account entity, having three main attributes "account_number", "holder_name", and "balance." The class information also includes methods for performing banking operations, which are detailed further in a second section 306.

In the second section 306, the structured documentation 101 lists a set of methods associated with the "BankAccount" class. The set of methods may include, but not limited to, init, deposit, withdraw, and display_balance. In a third section 308, the structured documentation 101 documents that no independent functions are present in this particular code file. In a fourth section 310, the structured documentation 101 reiterates the presence of the "init method", which initializes the attributed for the "BankAccount" class, such as "account_number", "holder_name", and "balance". In a fifth section 312, the structured documentation 101 lists key variables used within the "BankAccount" class, which may include, but are not limited to, "account_number", "holder_name", "initial_balance", "new_account", "choice", and "amount".

The description in **FIG. 3** showcases the exemplary snapshot of the structured documentation 300 produced by the documentation determination module 206, as explained in **FIG. 1** and **FIG. 2****.** The structured documentation 300 serves as input for subsequent stages, such as determining the source knowledge graph and the target knowledge graph, as well as determining the preliminary target code in the migration process.

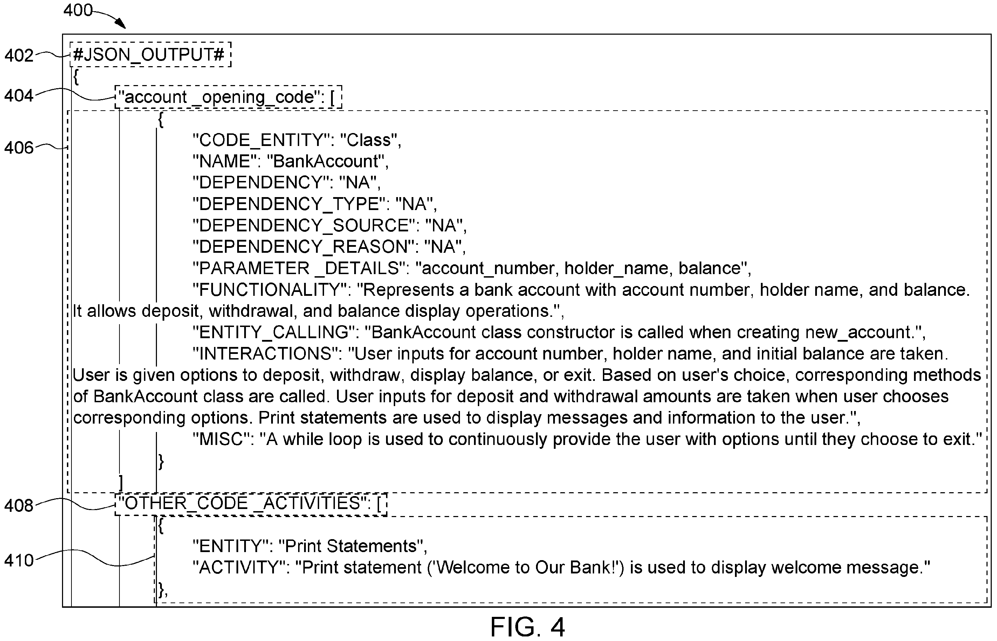

Referring now to **FIG. 4****,** an exemplary snapshot of an exemplary source knowledge graph 400, is depicted, in accordance with an embodiment of the present disclosure. **FIG. 4** is explained in conjunction with **FIG. 1** and **FIG. 2****.** The exemplary snapshot illustrates the source knowledge graph 400. The source knowledge graph 400 is created based on the structured documentation 300.

In a first section 402, the source knowledge graph 400 shows an output format of the source knowledge graph 400 which is depicted as JSON, which is a structured data format used to represent the plurality of source code entities. In a second section 404, the source knowledge graph 400 represents detailed information about the "BankAccount" class, which is documented as part of the source knowledge graph 400. The "BankAccount" class is broken down into various fields that describe the plurality of source code entities and its attributes. In a third section 406, the plurality of source code entities represents the "BankAccount" class, having attributes such as a "CODE_ENTITY", "NAME", "DEPENDENCY", "DEPENDENCY_TYPE", "DEPENDENCY_SOURCE", "DEPENDENCY_REASON", "PARAMETER_DETAILS", "FUNCTIONALITY", "ENTITY CALLING", "INTERACTIONS" and "MISC". In a fourth section 408, the source knowledge graph 400 lists an "OTHER_CODE_ACTIVITIES" class which represents additional activities or operations performed by the source code beyond core functionality of the "BankAccount" class. In a fifth section 410, under the "OTHER_CODE_ACTIVITIES" class, the source knowledge graph 400 shows an "ENTITY" named "Print Statements". The source knowledge graph 400 also specifies an "ACTIVITY" related to printing statements, which includes a welcome message ("Welcome to our Bank!"). This indicates how the code is structured to interact with the user through print statements which serves as a form of messaging or feedback.

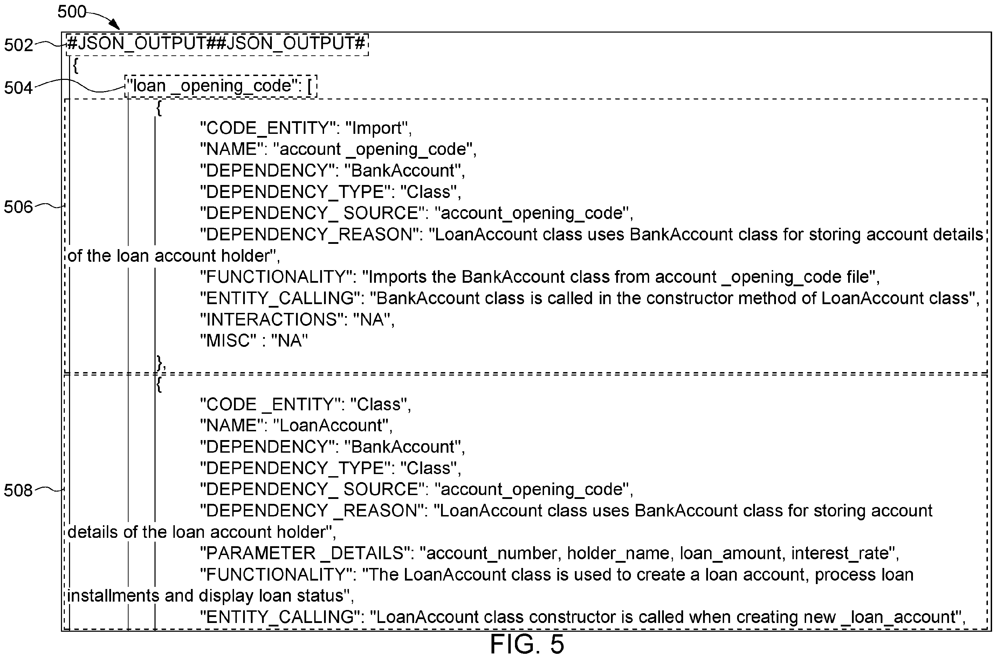

The source knowledge graph 400 depicted in **FIG. 4** is used during the migration of the source code from the source programming language to the target programming language. The source knowledge graph 400 captures not just the structure but also the logic and interactions involved in the source code. The source knowledge graph 400 provides a comprehensive view of each source code entity (in this embodiment, the "BankAccount" class) including its parameters, functionality, and interaction with other components. The source knowledge graph 400 enables a clear understanding of the underlying source code to help in the migration of the source code from the source programming language to the target programming language. The source knowledge graph 400 provides detailed insights into how different parts of the code depend on each other and interact, which is critical when determining the target knowledge graph for the migration process. As described in **FIG.** 1 and **FIG. 2****,** the code migration unit 102 determines the source knowledge graph 400 using the LLM 122, which processes both the source code and the structured documentation 300. The source knowledge graph 400 is then used to determine a target knowledge graph, as depicted in detail below in **FIG. 5****.**

Referring now to **FIG. 5****,** an exemplary snapshot of an exemplary target knowledge graph 500, is depicted, in accordance with an embodiment of the present disclosure. **FIG. 5** is explained in conjunction with **FIG. 1** and **FIG. 2****.** The exemplary snapshot illustrates a structured representation of the plurality of target code entities in the target programming language, as part of the migration process from the source programming language to the target programming language. The target knowledge graph 500 is determined using the LLM 122 and the source knowledge graph 400. The target knowledge graph 500 is crucial for translating the source code structure and its dependencies written in the source programming language into the target programming language.

In a first section 502, similar to the source knowledge graph 400 in **FIG. 4****,** the target knowledge graph 500 represents an output depicted in JSON format which represents the structure of the plurality of target code entities and their respective dependencies in the target programming language. In a second section 504, the target knowledge graph 500 represents a "loan_opening_code" function which provides detailed information about the plurality of target code entities involved in the loan account process. The second section 504 shows two different target code entities in the "loan_opening_code" functionality.

In a third section 506, the target knowledge graph 500 defines a target code entity of type "Import". In this section 506, the target knowledge graph 500 further showcases other attributes corresponding to the target programming language such as "NAME", "DEPENDENCY", "DEPENDENCY_TYPE", "DEPENDENCY_SORUCE", "DEPENDENCY REASON", "FUNCTIONALITY", "ENTITY CALLING", "INTERACTIONS", and "MIC". In a fourth section 508, the target knowledge graph 500 defines a target code entity of type "class" called as "LoanAccount", which depends on the "BankAccount" class. In the fourth section 508, the target knowledge graph 500 further shows "DEPENDENCY_TYPE", "DEPENDENCY_SOURCE", "DEPENDENCY_REASON", "PARAMETERS_DETAILS", "FUNCTIONALITY", and "ENTITY_CALLING".

The target knowledge graph 500 as depicted in **FIG. 5** represents how the plurality of target code entities, such as imports and classes, are structured for the target programming language. The target knowledge graph 500 is built on the source knowledge graph 400 (as seen in **FIG. 4**) and captures critical information about dependencies and code functionality in the target programming language. The target knowledge graph 500 shows dependencies between the plurality of target code entities, such as how the "LoanAccount" class depends on the "BankAccount" class.

As explained in **FIG. 1** and **FIG. 2****,** the code migration unit 102 determines the target knowledge graph 500 using the LLM 122, which uses both the source knowledge graph 400 and the target programming language. The target knowledge graph 500 represents the fundamental structure for determining the preliminary target code. The detailed JSON output shown in **FIG. 5** reflects how the plurality of target entities like "LoanAccount" class and its dependencies are migrated from the source programming language to the target programming language (i.e., JSON)

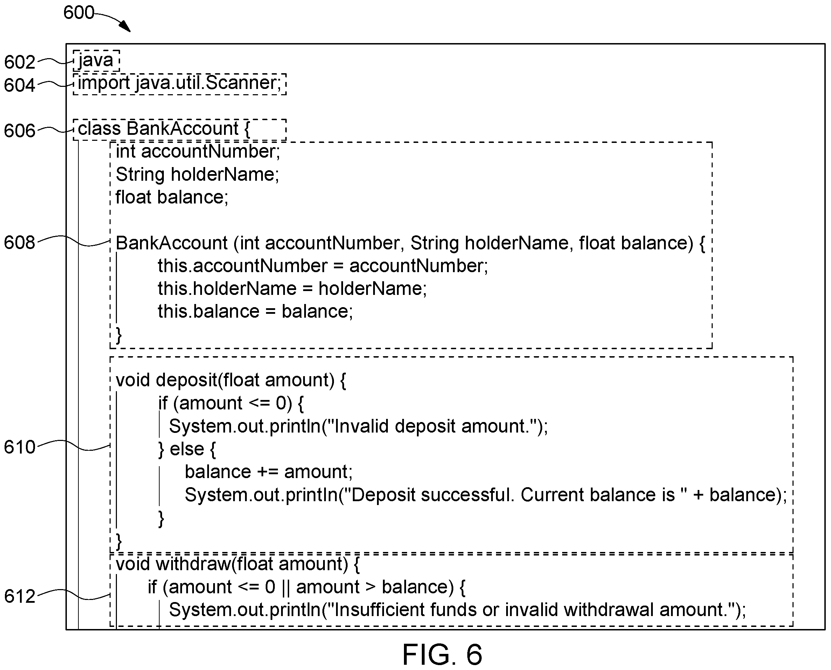

Referring now to **FIG. 6****,** an exemplary snapshot of an exemplary preliminary target code 600, is depicted, in accordance with an embodiment of the present disclosure. **FIG. 6** is explained in conjunction with **FIG. 1** and **FIG. 2****.** The exemplary snapshot depicts a portion of the preliminary target code 600 for the target programming language (i.e., Java), derived from the target knowledge graph 500 and guided by the logic and structure preserved from the source programming language.

The preliminary target code 600 begins with a first section 602, which is a reference to "Java" as the target programming language which represents that the migration involves the conversion from the source programming language (i.e., Python) to the target programming language (i.e., Java). The preliminary target code 600 further shows a second section 604, which imports the necessary "Java" utility such as "java.util. Scanner", which is a standard library used to capture user input in console-based Java applications. The preliminary target code 600 further shows a third section 606, which shows the "BankAccount" class, representing the primary class for managing bank account operations in this context. The "BankAccount" class encapsulates multiple attributes and methods for managing a bank account, adhering to the functionality and logic from the source code while conforming to the conventions of the target programming language (i.e., Java).

The preliminary target code 600 further shows a fourth section 608, which depicts the definition of three variables within the "BankAccount" class. The three variables may be such as "int accountNumber", "String holderName", "float balance". The "int accountNumber" variable stores the account number as an integer. The "String holderName" variable holds the name of the account holder. The "float balance" variable maintains the balance of the account as a floating-point number. The fourth section 608 further depicts a constructor method "BankAccount(int accountNumber, String holderName, float balance)" which initializes the instance variables. The method constructor assigns the provided account number, holder name, and balance to the respective variables, utilizing the "this" keyword to differentiate between instance and parameter variables.

The preliminary target code 600 further shows a fifth section 610, which depicts a method "deposit (float amount)". The "deposit (float amount)" method allows a user to deposit money into their bank account. The logic within the "deposit (float amount)" method includes error handling for invalid deposits (when the deposit amount is less than or equal to zero) and successful deposits. If the deposits are valid, the amount is added to the account balance, and a confirmation message is printed.

The preliminary target code 600 further shows a sixth section 612, which depicts a method "withdraw (float amount)". The "withdraw (float amount)" method enables the user to withdraw money from their bank account. The "withdraw (float amount)" method checks if the withdrawal amount is valid (greater than zero) and whether the balance is sufficient to cover the withdrawal. If either condition is not met, an error message is printed. Otherwise, the balance is reduced by the withdrawal amount, and a success message is displayed.

The exemplary snapshot of the preliminary target code 600 represents a portion of the migrated functionality of the source code from the source programming language to the target programming language using the target knowledge graph 500. As shown in **FIG. 1** and **FIG. 2****,** the code migration unit 102 uses the LLM 122 to determine the preliminary target code 600 based on the target knowledge graph 500.

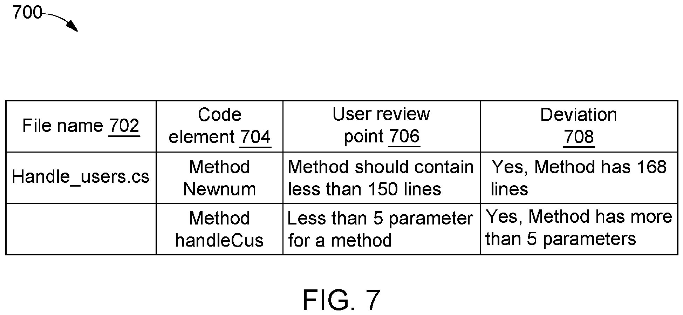

Referring now to **FIG. 7****,** an exemplary snapshot of an exemplary evaluation report 700, is depicted, in accordance with an embodiment of the present disclosure. **FIG. 7** is explained in conjunction with **FIG. 1** and **FIG.** 2. The exemplary snapshot provides a tabular report summarizing the evaluation of the preliminary target code. The evaluation report 700 may include a plurality of columns. The plurality of columns may be for example, a file name column 702, a code element column 704, a user review point column 706, and a deviation column 708.

The file name column 702 lists the file name under evaluation. In this case, the file is named as "Handle_users.cs", which indicates a C# file in which the preliminary target code has been present. The preliminary target code within this file is evaluated based on the set of code migration instructions as discussed in this report as the user review point column 706. The code element column 704 identifies the specific code element being evaluated within the "Handle_users.cs" file. Two methods from the "Handle_users.cs" file are under evaluation such as a "Newnum" method and a "handleCus" method. The "Newnum" method is likely handling some functionality related to numerical data or processing. The "handleCus" method may involve handling customer-related logic.

The user review point column 706 outlines the specific user review points or requirements from the set of code migration instructions that the preliminary target code must adhere to. These are user-specified criteria for code quality and structure. In this embodiment, two review points are evaluated. The two review points include method length constraint and parameter. In the method length constraint review point, methods should not exceed 150 lines of code to maintain readability and manageability. In the parameter constraint review point, methods should have fewer than 5 parameters to ensure simplicity and ease of use of the target code.

The deviation column 708 captures any deviation from the user review point. The deviation column 708 flags violations of the specified user review points. For the "Newnum" method length constraint, there is a deviation as the method contains 168 lines of code, which exceeds the given 150-line limit set by the user. For the "handleCus" method, the evaluation report 700 indicates that the method has more than 5 parameters which violates the constraint of limiting methods to fewer than 5 parameters.

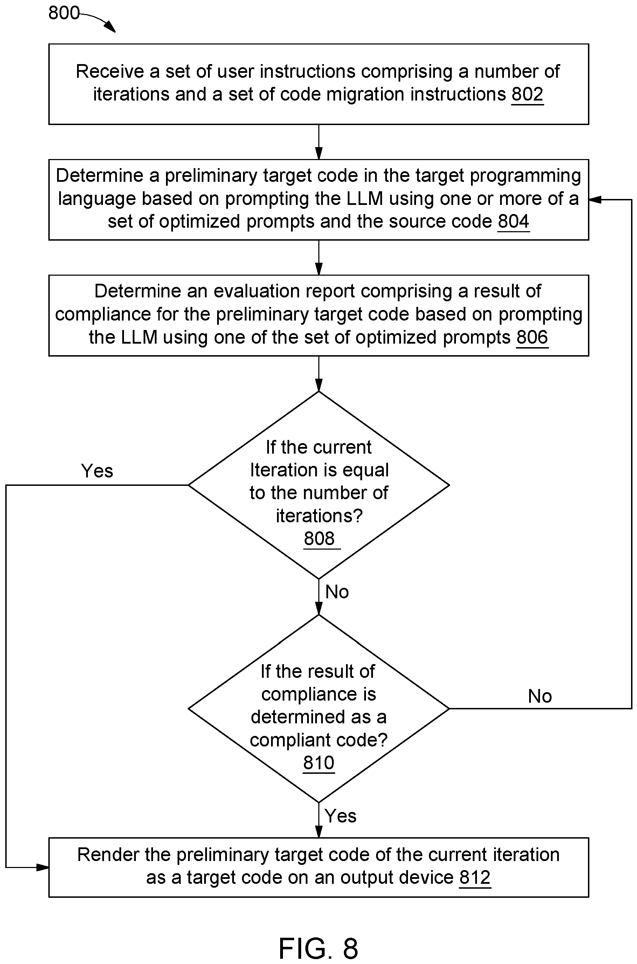

Referring now to **FIG. 8****,** a flow diagram 800 of a methodology of migrating source code from source programming language to target programming language, is illustrated, in accordance with an embodiment of the present disclosure. **FIG. 8** is explained in conjunction with **FIGs. 1-7**. In an embodiment, the flow diagram 800 may include a plurality of steps that may be performed by various modules of the code migration unit 102 so as to migrate source code from source programming language to target programming language.

At step 802, the code migration unit 102 may receive a set of user instructions that may include a number of iterations and a set of code migration instructions as an input. The set of code migration instructions may include, but not limited to, a source code, functional information of the source code, a source programming language, and a target programming language. In an embodiment, the input may be indicated or provided by a user via the I/O device 108. In an embodiment, the source code may be received from the code repository 116.

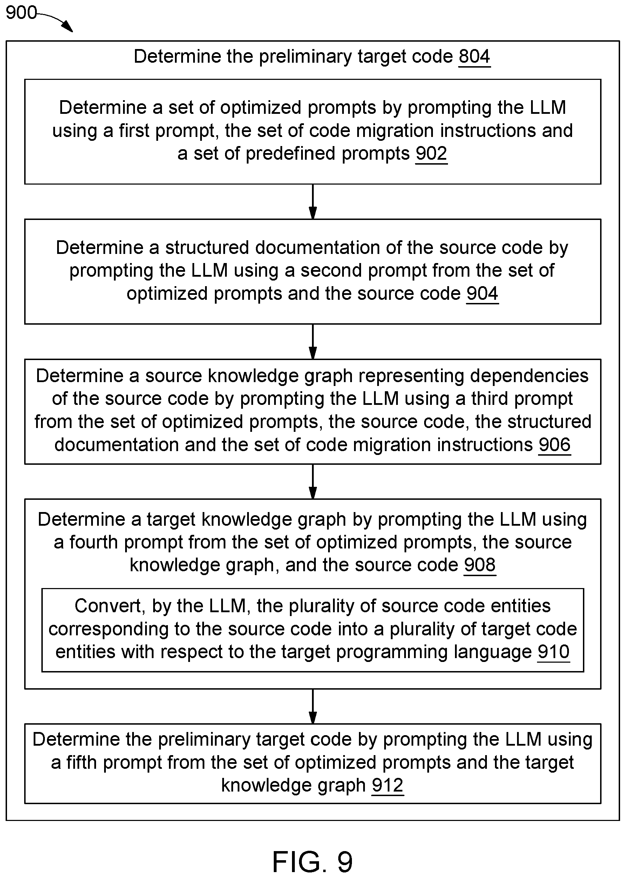

Further at step 804, the code migration unit 102 may determine a preliminary target code in the target programming language based on prompting the LLM using one or more of a set of optimized prompts and the source code. The determination of the preliminary target code in the target programming language will be explained in greater detail below in **FIG. 9****.**

Further at step 806, the code migration unit 102 may determine an evaluation report for the preliminary target code based on prompting the LLM 122 using one from the set of optimized prompts, the set of code migration instructions and the preliminary target code of a current iteration. In an embodiment, the evaluation report may include a result of compliance of the preliminary target code of the current iteration with respect to the set of code migration instructions.

Further at step 808, the code migration unit 102 may perform a check to determine if the current iteration is equal to the number of iterations. Upon determining the current iteration as equal to the number of iterations, the code migration unit 102, at step 812, may render the preliminary target code of the current iteration as a target code on the I/O device 108.

Upon determining the current iteration as not equal to the number of iterations, the code migration unit 102, at step 810, may further perform a check to determine if the result of compliance of the preliminary target code of the current iteration is determined as a compliant code. Upon determining the result of compliance of the preliminary target code of the current iteration as a non-compliant code, the code migration unit 102 may modify the set of optimized prompts for a subsequent instruction based on the evaluation report by prompting the LLM 122. Further, the code migration unit 102, at step 804, may again determine the preliminary target code in the target programming language based on prompting the LLM 122 using one or more of the modified set of optimized prompts. Upon determining the result of compliance of the preliminary target code of the current iteration as a compliant code, the code migration unit 102, at step 812, may render the preliminary target code of the current iteration as a target code on the I/O device 108.

Referring now to **FIG. 9****,** a flow diagram of a methodology of determining the preliminary target code, in accordance with an embodiment of present disclosure. **FIG. 9** is explained in conjunction with **FIG. 8****.** In an embodiment, the flow diagram may include a plurality of steps that may be performed by various modules of the code migration unit 102 so as to determine the preliminary target code.

At step 902, the code migration unit 102 may determine a set of optimized prompts by prompting the LLM 122 using a first prompt, the set of code migration instructions and a set of predefined prompts. In an embodiment, the first prompts may be contextualized to determine the set of optimized prompts by contextualizing the set of predefined prompts based on the set of code migration instructions.

Further at step 904, the code migration unit 102 may determine a structured documentation of the source code by prompting the LLM 122 using a second prompt from the set of optimized prompts and the source code. In an embodiment, the second prompt may be contextualized to determine the structured documentation of the source code. In an embodiment, the structured documentation may include a plurality of source code entities corresponding to the source code. In an embodiment, the plurality of source code entities may include, but not be limited to, class information, function information, sub-routine information, constructor information and module information, package information decorator information, exception information and lambda function information.

Further at step 906, the code migration unit 102 may determine a source knowledge graph representing dependencies of the source code by prompting the LLM 122 using a third prompt from the set of optimized prompts, the source code, the structured documentation and the set of code migration instructions. In an embodiment, the third prompt may be contextualized to determine the source knowledge graph based on the source code, the structured documentation and the set of code migration instructions.

Further at step 908, the code migration unit 102 may determine a target knowledge graph by prompting the LLM 122 using a fourth prompt from the set of optimized prompts, the source knowledge graph, and the source code. In an embodiment, the fourth prompt may be contextualized to determine the target knowledge graph based on the source code and the source knowledge graph. In order to determine the target knowledge graph, the LLM 122, at step 910, may convert the plurality of source code entities corresponding to the source code into a plurality of target code entities with respect to the target programming language.

Further at step 912, the code migration unit 102 may determine a preliminary target code in the target programming language based on prompting the LLM 122 using a fifth prompt from the set of optimized prompts and the target knowledge graph. In an embodiment, the fifth prompt may be contextualized to determine the preliminary target code based on the target knowledge graph.

Thus, the disclosed method 800 and system 100 overcome the challenges associated with conventional code migration systems by migrating the source code from the source programming language to the target programming language. This process begins with the code migration unit 102 receiving a set of user instructions, including a specified number of iterations and code migration instructions. For each iteration, the code migration unit 102 generates preliminary target code in the target language by prompting the LLM 122 with optimized prompts based on the source code and migration instructions. The code migration unit 102 evaluates the preliminary target code through an evaluation report that checks its compliance with user requirements. If the preliminary target code is found non-compliant, the optimized prompts are modified, and the process repeats until either the preliminary target code meets compliance standards, or the current iteration becomes equal to the specified number of iterations. Upon successful compliance, the preliminary target code is finalized and rendered as the target code. Additionally, the method involves generating structured documentation, source and target knowledge graphs, and translating source code entities into target code equivalents. This iterative approach ensures accurate and efficient source code migration from the source programming language to the target programming language.

The disclosed method 800 and system 100 lies in its integration of a Large Language Model (LLM) to autonomously and intelligently handle the complex process of code migration across diverse programming languages and platforms. Unlike traditional rule-based systems, this disclosed method 800 and system 100 offers a flexible, prompt-driven approach that is not bound by rigid rules or external dependencies. The disclosed method 800 and system 100 introduces an innovative workflow where the LLM is guided through a series of contextualized prompts, each stage designed to capture detailed documentation, generate structured knowledge graphs, and progressively refine target code. This approach not only overcomes limitations related to the LLM context windows by breaking down the process into manageable and iterative steps, but also provides users with direct control and feedback mechanisms at every phase of the migration. This continuous feedback loop and customization capability make the process highly adaptable, thereby ensuring that the final target code retains the core logic and functionality of the original source code, while optimizing for performance in the target programming language.

The disclosed method 800 and system 100 is agnostic to the source and target programming languages or platforms. The disclosed method 800 and system 100 provides automated discovery and re-engineering of the source code without requiring any external tools, platforms, or libraries. The disclosed method 800 and system 100 allows users to easily steer and instruct the Large Language Model (LLM) for the conversion of specific code patterns.

As will be appreciated by those skilled in the art, the techniques described in the various embodiments discussed above are not routine, or conventional, or well-understood in the art. The techniques discussed above provide for migrating source code from the source programming language to the target programming language.

In light of the above-mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps bring an improvement in the functioning of the device itself as the claimed steps provide a technical solution to a technical problem.

The specification has described the method and system for migrating source code from the source programming language to the target programming language. The illustrated steps are set out to explain the exemplary embodiments shown, and it should be anticipated that ongoing technological development will change the manner in which particular functions are performed. These examples are presented herein for the purpose of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

It is intended that the disclosure and examples be considered as exemplary only, with a true scope of disclosed embodiments being indicated by the following claims.

Also disclosed herein are the following clauses:
1. A method for migrating a source code from a source programming language to a target programming language using a Large Language Model (LLM), the method comprising:
   receiving, by a code migration unit, a set of user instructions comprising a number of iterations and a set of code migration instructions;
   for each of the number of iterations:
      determining, by the code migration unit, a preliminary target code in the target programming language based on prompting the LLM using one or more of a set of optimized prompts and the source code, wherein the source code is received from a code repository;
      determining, by the code migration unit, an evaluation report for the preliminary target code based on prompting the LLM using one from the set of optimized prompts, the set of code migration instructions and the preliminary target code of a current iteration,
      wherein the evaluation report comprises a result of compliance of the preliminary target code of the current iteration with respect to the set of code migration instructions,
      wherein the set of optimized prompts are modified for a subsequent iteration by the LLM based on the evaluation report upon determining the result of compliance of the preliminary target code of the current iteration as a non-compliant code; and
   upon determining the result of compliance of the preliminary target code of the current iteration as a compliant code:
      rendering, by the code migration unit, the preliminary target code of the current iteration as a target code on an output device.
2. The method of clause 1, comprising:
   determining, by the code migration unit, the set of optimized prompts by prompting the LLM using a first prompt, the set of code migration instructions and a set of predefined prompts,
   wherein the first prompt is contextualized to determine the set of optimized prompts by contextualizing the set of predefined prompts based on the set of code migration instructions.
3. The method of clause 2, wherein determining the preliminary target code comprises:
   determining, by the code migration unit, a structured documentation of the source code by prompting the LLM using a second prompt from the set of optimized prompts and the source code, wherein the second prompt is contextualized to determine the structured documentation of the source code, wherein the structured documentation comprises a plurality of source code entities corresponding to the source code, and
   wherein the plurality of source code entities comprises class information, function information, sub-routine information, constructor information and module information, package information, decorator information, exception information and lambda function information.
4. The method of clause 3, wherein determining the preliminary target code comprises:
   determining, by the code migration unit, a source knowledge graph representing dependencies of the source code by prompting the LLM using a third prompt from the set of optimized prompts, the source code, the structured documentation and the set of code migration instructions,
   wherein the third prompt is contextualized to determine the source knowledge graph based on the source code, the structured documentation and the set of code migration instructions.
5. The method of clause 4, wherein determining the preliminary target code comprises:
   determining, by the code migration unit, a target knowledge graph by prompting the LLM using a fourth prompt from the set of optimized prompts, the source knowledge graph, and the source code,
   wherein the fourth prompt is contextualized to determine the target knowledge graph based on the source code and the source knowledge graph.
6. The method of clause 5, wherein determining the preliminary target code comprises:
   determining, by the code migration unit, the preliminary target code by prompting the LLM using a fifth prompt from the set of optimized prompts and the target knowledge graph,
   wherein the fifth prompt is contextualized to determine the preliminary target code based on the target knowledge graph.
7. The method of clause 5, wherein determining the target knowledge graph comprises:
   converting, by the LLM, the plurality of source code entities corresponding to the source code into a plurality of target code entities with respect to the target programming language.
8. A system for migrating a source code from a source programming language to a target programming language using a Large Language Model (LLM), comprising:
   a code migration unit comprising:
   a processor; and
   a memory communicably coupled to the processor, wherein the memory stores processor-executable instructions, which when executed by the processor, cause the processor to:
      receive a set of user instructions comprising a number of iterations and a set of code migration instructions;
      for each of the number of iterations:
         determine a preliminary target code in the target programming language based on prompting the LLM using one or more of a set of optimized prompts and the source code, wherein the source code is received from a code repository;
         determine an evaluation report for the preliminary target code based on prompting the LLM using one from the set of optimized prompts, the set of code migration instructions and the preliminary target code of a current iteration,
            wherein the evaluation report comprises a result of compliance of the preliminary target code of the current iteration with respect to the set of code migration instructions,
            wherein the set of optimized prompts are modified for a subsequent iteration by the LLM based on the evaluation report upon determining the result of compliance of the preliminary target code of the current iteration as a non-compliant code; and
      render the preliminary target code of the current iteration as a target code on an output device, upon determining the result of compliance of the preliminary target code of the current iteration as a compliant code.
9. The system of clause 8, wherein the processor-executable instructions further cause the processor to:
   determine the set of optimized prompts by prompting the LLM using a first prompt, the set of code migration instructions and a set of predefined prompts,
   wherein the first prompt is contextualized to determine the set of optimized prompts by contextualizing the set of predefined prompts based on the set of code migration instructions.
10. The system of clause 9, wherein to determine the preliminary target code, the processor-executable instructions cause the processor to:
   determine a structured documentation of the source code by prompting the LLM using a second prompt from the set of optimized prompts and the source code,
   wherein the second prompt is contextualized to determine the structured documentation of the source code, wherein the structured documentation comprises a plurality of source code entities corresponding to the source code, and
   wherein the plurality of source code entities comprises class information, function information, sub-routine information, constructor information and module information, package information, decorator information, exception information and lambda function information.
11. The system of clause 10, wherein to determine the preliminary target code, the processor-executable instructions cause the processor to:
   determine a source knowledge graph representing dependencies of the source code by prompting the LLM using a third prompt from the set of optimized prompts, the source code, the structured documentation and the set of code migration instructions,
   wherein the third prompt is contextualized to determine the source knowledge graph based on the source code, the structured documentation and the set of code migration instructions.
12. The system of clause 11, wherein to determine the preliminary target code, the processor executable instructions cause the processor to:
   determine a target knowledge graph by prompting the LLM using a fourth prompt from the set of optimized prompts, the source knowledge graph, and the source code,
   wherein the fourth prompt is contextualized to determine the target knowledge graph based on the source code and the source knowledge graph.
13. The system of clause 11, wherein to determine the preliminary target code, the processor-executable instructions cause the processor to:
   determine the preliminary target code by prompting the LLM using a fifth prompt from the set of optimized prompts and the target knowledge graph,
   wherein the fifth prompt is contextualized to determine the preliminary target code based on the target knowledge graph.
14. The system of clause 12, wherein to determine the target knowledge graph, the LLM is configured to:
   convert the plurality of source code entities corresponding to the source code into a plurality of target code entities with respect to the target programming language.
15. A non-transitory computer-readable medium storing computer-executable instructions for migrating a source code from a source programming language to a target programming language using a Large Language Model (LLM), the computer-executable instructions configured for:
   receiving a set of user instructions comprising a number of iterations and a set of code migration instructions;
   for each of the number of iterations:
      determining a preliminary target code in the target programming language based on prompting the LLM using one or more of a set of optimized prompts and the source code, wherein the source code is received from a code repository;
      determining an evaluation report for the preliminary target code based on prompting the LLM using one from the set of optimized prompts, the set of code migration instructions and the preliminary target code of a current iteration,
         wherein the evaluation report comprises a result of compliance of the preliminary target code of the current iteration with respect to the set of code migration instructions,
         wherein the set of optimized prompts are modified for a subsequent iteration by the LLM based on the evaluation report upon determining the result of compliance of the preliminary target code of the current iteration as a non-compliant code; and
      upon determining the result of compliance of the preliminary target code of the current iteration as a compliant code:
         rendering the preliminary target code of the current iteration as a target code on an output device.
16. The non-transitory computer readable medium of clause 15, wherein the computer-executable instructions are further configured for:
   determining the set of optimized prompts by prompting the LLM using a first prompt, the set of code migration instructions and a set of predefined prompts,
   wherein the first prompt is contextualized to determine the set of optimized prompts by contextualizing the set of predefined prompts based on the set of code migration instructions.
17. The non-transitory computer readable medium of clause 16, wherein to determine the preliminary target code, the computer-executable instructions are configured for:
   determining a structured documentation of the source code by prompting the LLM using a second prompt from the set of optimized prompts and the source code, wherein the second prompt is contextualized to determine the structured documentation of the source code, wherein the structured documentation comprises a plurality of source code entities corresponding to the source code, and
   wherein the plurality of source code entities comprises class information, function information, sub-routine information, constructor information and module information, package information, decorator information, exception information and lambda function information.
18. The non-transitory computer readable medium of clause 17, wherein to determine the preliminary target code, the computer-executable instructions are further configured for:
   determining a source knowledge graph representing dependencies of the source code by prompting the LLM using a third prompt from the set of optimized prompts, the source code, the structured documentation and the set of code migration instructions,
   wherein the third prompt is contextualized to determine the source knowledge graph based on the source code, the structured documentation and the set of code migration instructions.
19. The non-transitory computer readable medium of clause 18, wherein to determine the preliminary target code, the computer-executable instructions are further configured for:
   determining a target knowledge graph by prompting the LLM using a fourth prompt from the set of optimized prompts, the source knowledge graph, and the source code,
   wherein the fourth prompt is contextualized to determine the target knowledge graph based on the source code and the source knowledge graph.
20. The non-transitory computer readable medium of clause 19, wherein to determine the preliminary target code, the computer-executable instructions are further configured for:
   determining the preliminary target code by prompting the LLM using a fifth prompt from the set of optimized prompts and the target knowledge graph,
   wherein the fifth prompt is contextualized to determine the preliminary target code based on the target knowledge graph.

## Claims

1. A method for migrating a source code from a source programming language to a target programming language using a Large Language Model, LLM, the method comprising:
receiving, by a code migration unit, a set of user instructions comprising a number of iterations and a set of code migration instructions;
for each of the number of iterations:
determining, by the code migration unit, a preliminary target code in the target programming language based on prompting the LLM using one or more of a set of optimized prompts and the source code, wherein the source code is received from a code repository;
determining, by the code migration unit, an evaluation report for the preliminary target code based on prompting the LLM using one from the set of optimized prompts, the set of code migration instructions and the preliminary target code of a current iteration,
wherein the evaluation report comprises a result of compliance of the preliminary target code of the current iteration with respect to the set of code migration instructions,
wherein the set of optimized prompts are modified for a subsequent iteration by the LLM based on the evaluation report upon determining the result of compliance of the preliminary target code of the current iteration as a non-compliant code; and
upon determining the result of compliance of the preliminary target code of the current iteration as a compliant code:
rendering, by the code migration unit, the preliminary target code of the current iteration as a target code on an output device.

2. The method of claim 1, comprising:
determining, by the code migration unit, the set of optimized prompts by prompting the LLM using a first prompt, the set of code migration instructions, and a set of predefined prompts,
wherein the first prompt is contextualized to determine the set of optimized prompts by contextualizing the set of predefined prompts based on the set of code migration instructions.

3. The method of claim 2, wherein determining the preliminary target code comprises:
determining, by the code migration unit, a structured documentation of the source code by prompting the LLM using a second prompt from the set of optimized prompts and the source code, wherein the second prompt is contextualized to determine the structured documentation of the source code, wherein the structured documentation comprises a plurality of source code entities corresponding to the source code, and
wherein the plurality of source code entities comprises class information, function information, sub-routine information, constructor information and module information, package information, decorator information, exception information, and lambda function information.

4. The method of claim 3, wherein determining the preliminary target code comprises:
determining, by the code migration unit, a source knowledge graph representing dependencies of the source code by prompting the LLM using a third prompt from the set of optimized prompts, the source code, the structured documentation, and the set of code migration instructions,
wherein the third prompt is contextualized to determine the source knowledge graph based on the source code, the structured documentation, and the set of code migration instructions.

5. The method of claim 4, wherein determining the preliminary target code comprises:
determining, by the code migration unit, a target knowledge graph by prompting the LLM using a fourth prompt from the set of optimized prompts, the source knowledge graph, and the source code,
wherein the fourth prompt is contextualized to determine the target knowledge graph based on the source code and the source knowledge graph.

6. The method of claim 5, wherein determining the preliminary target code comprises:
determining, by the code migration unit, the preliminary target code by prompting the LLM using a fifth prompt from the set of optimized prompts and the target knowledge graph,
wherein the fifth prompt is contextualized to determine the preliminary target code based on the target knowledge graph.

7. The method of claim 5 or 6, wherein determining the target knowledge graph comprises:
converting, by the LLM, the plurality of source code entities corresponding to the source code into a plurality of target code entities with respect to the target programming language.

8. A system for migrating a source code from a source programming language to a target programming language using a Large Language Model, LLM, comprising:
a code migration unit comprising:
a processor; and
a memory communicably coupled to the processor, wherein the memory stores processor-executable instructions, which when executed by the processor, cause the processor to:
receive a set of user instructions comprising a number of iterations and a set of code migration instructions;
for each of the number of iterations:
determine a preliminary target code in the target programming language based on prompting the LLM using one or more of a set of optimized prompts and the source code, wherein the source code is received from a code repository;
determine an evaluation report for the preliminary target code based on prompting the LLM using one from the set of optimized prompts, the set of code migration instructions and the preliminary target code of a current iteration,
wherein the evaluation report comprises a result of compliance of the preliminary target code of the current iteration with respect to the set of code migration instructions,
wherein the set of optimized prompts are modified for a subsequent iteration by the LLM based on the evaluation report upon determining the result of compliance of the preliminary target code of the current iteration as a non-compliant code; and
render the preliminary target code of the current iteration as a target code on an output device, upon determining the result of compliance of the preliminary target code of the current iteration as a compliant code.

9. The system of claim 8, wherein the processor-executable instructions further cause the processor to:
determine the set of optimized prompts by prompting the LLM using a first prompt, the set of code migration instructions, and a set of predefined prompts,
wherein the first prompt is contextualized to determine the set of optimized prompts by contextualizing the set of predefined prompts based on the set of code migration instructions.

10. The system of claim 9, wherein to determine the preliminary target code, the processor-executable instructions cause the processor to:
determine a structured documentation of the source code by prompting the LLM using a second prompt from the set of optimized prompts and the source code,
wherein the second prompt is contextualized to determine the structured documentation of the source code, wherein the structured documentation comprises a plurality of source code entities corresponding to the source code, and
wherein the plurality of source code entities comprises class information, function information, sub-routine information, constructor information and module information, package information, decorator information, exception information and lambda function information.

11. The system of claim 10, wherein to determine the preliminary target code, the processor-executable instructions cause the processor to:
determine a source knowledge graph representing dependencies of the source code by prompting the LLM using a third prompt from the set of optimized prompts, the source code, the structured documentation and the set of code migration instructions,
wherein the third prompt is contextualized to determine the source knowledge graph based on the source code, the structured documentation and the set of code migration instructions.

12. The system of claim 11, wherein to determine the preliminary target code, the processor executable instructions cause the processor to:
determine a target knowledge graph by prompting the LLM using a fourth prompt from the set of optimized prompts, the source knowledge graph, and the source code,
wherein the fourth prompt is contextualized to determine the target knowledge graph based on the source code and the source knowledge graph.

13. The system of claim 12, wherein to determine the preliminary target code, the processor-executable instructions cause the processor to:
determine the preliminary target code by prompting the LLM using a fifth prompt from the set of optimized prompts and the target knowledge graph,
wherein the fifth prompt is contextualized to determine the preliminary target code based on the target knowledge graph.

14. The system of claim 12 or 13, wherein to determine the target knowledge graph, the LLM is configured to:
convert the plurality of source code entities corresponding to the source code into a plurality of target code entities with respect to the target programming language.

15. A computer-readable medium storing computer-executable instructions for migrating a source code from a source programming language to a target programming language using a Large Language Model (LLM), wherein executing the computer-executable instructions by at least one processor of a code migration unit causes the code migration unit to perform the method of any of claims 1 to 7.
